# EUROPÄISCHE PATENTSCHRIFT

(11) **EP 2 785 621 B1**
(45) Veröffentlichungstag und Bekanntmachung des Hinweises auf die Patenterteilung: **01.02.2017**
(21) Anmeldenummer: 12775193.1
(22) Anmeldetag: 27.09.2012
(51) Int. Cl.: B65G 47/51

(54) **VERFAHREN UND SYSTEM ZUM ORDNEN MEHRERER IN EINEM MASSENSTROM BEWEGTER ARTIKEL**
METHOD AND SYSTEM FOR ARRANGING A PLURALITY OF ARTICLES MOVED IN A MASS FLOW
PROCÉDÉ ET SYSTÈME D'ORDONNANCEMENT DE PLUSIEURS ARTICLES SE DÉPLAÇANT DANS UN FLUX MASSIQUE

(30) Priorität: 28.11.2011 DE 102011055780
(43) Veröffentlichungstag der Anmeldung: 08.10.2014
(73) Patentinhaber: Krones AG, 93073 Neutraubling (DE)
(72) Erfinder: HAUSLADEN, Wolfgang, 93073 Neutraubling (DE); JOGSCH, Michael, 93073 Neutraubling (DE); MAYER, Josef, 93073 Neutraubling (DE); DEGLMANN, Josef, 93073 Neutraubling (DE)
(74) Vertreter: Benninger, Johannes
(86) Internationale Anmeldenummer: PCT/EP2012/069143
(87) Internationale Veröffentlichungsnummer: WO 2013/079244

(56) Entgegenhaltungen:
- EP-A1- 0 516 970
- EP-A1- 1 645 340
- EP-A2- 2 301 867
- DE-A1- 2 155 120
- DE-A1- 3 127 008
- DE-A1- 4 442 586
- FR-A1- 2 438 608
- FR-A1- 2 919 595
- GB-A- 1 274 753
- GB-A- 2 005 885
- US-A- 2 728 466
- US-A- 4 239 434
- US-A- 4 811 551
- US-A- 5 845 758

## Beschreibung

Die vorliegende Erfindung betrifft ein Verfahren und ein System zum Ordnen mehrerer in einem Massenstrom bewegter Artikel.

In der Verpackungsindustrie werden häufig vordefinierte Artikelzusammenstellungen als Verkaufseinheit gewünscht. Insbesondere in der Getränkeindustrie gibt es seit einiger Zeit Bestrebungen, verschiedene Getränkesorten in vorgegebener Zusammenstellung, beispielsweise als vorgemischte Verkaufspackungen, anbieten zu können. Hierzu sind aus dem Stand der Technik Verfahren bekannt, welche eine sortenreine Herstellung mit anschließender Kommissionierung vornehmen. Hilfsweise können hierfür Verteilvorrichtungen Verwendung finden, welche vor Kommissionierung eine sortenreine Beförderung von Produkten, beispielsweise von Getränkebehältern, ermöglichen. Beispielsweise ist eine derartige Verteilvorrichtung in der DE 20 2006 003 690 U1 gezeigt. So offenbart das DE-Gebrauchsmuster eine Förderweiche, mittels welcher ein Behälterstrom in mehrere weitere Behälterströme aufgeteilt werden kann. Hierfür umfasst die in dem DE-Gebrauchsmuster gezeigte Verteilvorrichtung mehrere rotierende Scheiben, die zur Aufnahme und Weitergabe von Behältern vorgesehen sind. Soll ein definiertes Ordnen für eine Behälterzusammenstellung erfolgen, so kann es sein, dass nicht immer sofort auf sämtliche erforderlichen Behälter zugegriffen werden kann. Hieraus kann ein Leerlauf bzw. eine Wartezeit resultieren, bis eine benötigte Sorte erneut verfügbar ist.

US 4,811,551beschreibt ein gattungsgemäßes Verfahren.

Aufgabe der Erfindung ist daher ein Verfahren zur Verfügung zu stellen, welches ein definiertes Ordnen mehrerer in einem Massenstrom beförderter unterschiedlicher Artikel und insbesondere unterschiedlicher Behälter oder Behältnisse ohne

Unterbrechung ermöglicht. Zudem soll das Verfahren auf einfache und unkomplizierte Weise umgesetzt werden können.

Die Aufgabe der Erfindung wird durch ein Verfahren mit den Merkmalen im Anspruch 1 und durch ein System mit den Merkmalen im Anspruch 8 gelöst. Weitere vorteilhafte Ausgestaltungen werden durch die Unteransprüche beschrieben.

Die vorliegende Erfindung betrifft ein Verfahren zum Ordnen mehrerer in einem Massenstrom bewegter Artikel, bei welchem hinsichtlich eines Zuordnungsmerkmals identisch ausgebildete Artikel aus dem Massenstrom einer eigenen Pufferstation zugeführt und in der Pufferstation gespeichert werden. Der Begriff "speichern" muss in der vorliegenden Erfindung nicht zwingend darauf hindeuten, dass Artikel in der Pufferstation ohne Bewegung gelagert werden. Auch können Artikel die Pufferstation passieren bzw. durchlaufen.

Die Zuführung an die jeweilige Pufferstation kann beispielsweise direkt über eine Übergabe- und/oder Transfereinrichtung erfolgen. Diese kann ein oder mehrere Greif- und/oder Halteelemente zur Übergabe der Artikel an die jeweilige Pufferstation besitzen. In einer bevorzugten Ausführungsform der vorliegenden Erfindung werden Artikel in Abhängigkeit ihres Zuordnungsmerkmals zunächst an eine eigene Gasse weitergegeben und/oder weitergeführt und über die Gassen einer eigenen Pufferstation zugeführt. Die Gassen können hierbei zumindest abschnittsweise parallel zueinander verlaufen.

Artikel können gemäß der Erfindung beispielsweise durch Produkte mit Behältern und/oder durch Produkte mit Behältnissen ausgebildet sein. So ist es möglich, dass durch ein erstes Zuordnungsmerkmal Artikel mit einer ersten Behältergeometrie und durch ein zweites Zuordnungsmerkmal Artikel mit einer zweiten Behältergeometrie gekennzeichnet sind. Auch kann es sein, dass sich das erste Zuordnungsmerkmal auf ein erstes Produkt bezieht und das zweite Zuordnungsmerkmal auf ein zweites Produkt, wobei sich die Produkte hierbei in Behältern und/oder Behältnissen mit identischer Behältergeometrie befinden können. Zudem kann es sein, dass durch ein erstes Zuordnungsmerkmal Behälter mit einer ersten Behälterfarbe gekennzeichnet sind und durch ein zweites Zuordnungsmerkmal Behälter mit einer zweiten Behälterfarbe gekennzeichnet sind. Findet das vorliegende Verfahren beispielsweise im Bereich der Getränkeindustrie Anwendung, so kann es sein, dass Artikel mit erstem Zuordnungsmerkmal eine erste Getränkesorte betreffen und Artikel mit zweitem Zuordnungsmerkmal eine zweite Getränkesorte. Auch können die Artikel beispielsweise durch Kosmetikprodukte ausgebildet sein, bei welchem der Artikel mit erstem oder zweitem Zuordnungsmerkmal ein Zusatzprodukt für eine Produktzusammenstellung betrifft.

In einer Ausführungsform der vorliegenden Erfindung können die Artikel im Massenstrom stehend auf einer Horizontalfördereinrichtung bewegt werden. Hierbei ist vorstellbar, dass Artikel hinsichtlich ihres Zuordnungsmerkmals inhomogen verteilt im Massenstrom bewegt werden. Beispielsweise können die Artikel einbahnig im Massenstrom aber auch mehrbahnig im Massenstrom bewegt werden. Auch können die Artikel in ihren jeweiligen Gassen zumindest abschnittsweise auf einer Horizontalfördereinrichtung befördert werden. In der Praxis haben sich Ausführungsformen bewährt, bei denen Artikel bei Beförderung im Massenstrom und in den jeweiligen Gassen durch seitlich Führungsschienen aufrecht gehalten und gestützt werden. Es ist hierbei vorstellbar, dass Artikel hintereinander aber auch nebeneinander im Massenstrom und/oder in den Gassen bewegt werden.

Zudem kann es sein, dass die Artikel beispielsweise durch eine Übergabe- und/oder Transfereinrichtung aus dem Massenstrom ihrer jeweiligen Gasse zugeführt werden. Die Übergabe- und/oder Transfereinrichtung kann beispielsweise über eine eigene Sensorik zur Erkennung eines Zuordnungsmerkmals der Artikel verfügen und die Artikel in Abhängigkeit ihres Zuordnungsmerkmals der jeweiligen Gasse zuführen. Es kann sich hierbei um eine oder mehrere optische Sensoren handeln. Beispielsweise kann die Übergabe- und/oder Transfereinrichtung durch ein oder mehrere selektiv verstellbare Weichen und/oder durch Einrichtungen mit Greifelementen und/oder durch einen oder mehrere Verteilsterne ausgebildet sein. Beinhaltet die Übergabe- und/oder Transfereinrichtung eine eigene Sensorik, so ist in einer bevorzugten Ausführungsform der vorliegenden Erfindung vorstellbar, dass die Übergabe- und/oder Transfereinrichtung beschädigte und/oder defekte Artikel vor Zuführung an die Pufferstation erkennt und aussondert. Beispielsweise kann die Übergabe und/oder Transfereinrichtung beschädigte und/oder defekte Artikel an eine Abführgasse weitergeben und/oder weiterleiten. Die Abführgasse kann ebenso über eine Horizontalfördereinrichtung verfügen.

In alternativen Ausführungsformen können auch mehrere Massenströme vorhanden sein, in welchen Artikel mit unterschiedlichen Zuordnungsmerkmalen bewegt werden. Beispielsweise kann die Übergabe- und/oder Transfereinrichtung derart ausgebildet sein, dass sie Artikel aus mehreren Massenströmen nacheinander oder zeitgleich unter Berücksichtigung von Zuordnungsmerkmalen der jeweiligen Pufferstation zuführt. Hierbei können mindestens zwei Gassen vorhanden sein, jedoch können auch drei Gassen, vier Gassen oder mehrere Gassen vorhanden sein. Sind mehrere Massenströme vorhanden, so kann für die Zuführung der Artikel an die jeweiligen Gassen lediglich eine gemeinsame Übergabe- und/oder Transfereinrichtung vorhanden sein. Auch ist vorstellbar, dass für ein oder mehrere Massenströme eine eigene Übergabe- und/oder Transfereinrichtung vorgesehen ist.

Das Verfahren ist erfindungsgemäß vorgesehen, um aus Artikeln eine vorgegebene Zusammenstellung zu bilden. Beispielsweise kann die vorgegebene Zusammenstellung derart definiert sein, dass die jeweilige Zusammenstellung lediglich Artikel mit identischem Zuordnungsmerkmal umfasst. Weiter kann die Zusammenstellung mehrere Artikel mit unterschiedlichem Zuordnungsmerkmal umfassen. In einer bevorzugten Ausführungsform der vorliegenden Erfindung ist die Zusammenstellung sowohl durch die Anzahl der jeweiligen Artikel mit bestimmtem Zuordnungsmerkmal als auch durch die Anordnung bzw. Position dieser Artikel in der jeweiligen Zusammenstellung definiert.

Es kann hierbei sein, dass mittels des erfindungsgemäßen Verfahrens über einen bestimmten Zeitraum zunächst eine erste Zusammenstellung an Artikeln gebildet wird. Die erste Artikelzusammenstellung kann hierbei eine hinsichtlich des Zuordnungsmerkmals bestimmte Anzahl an Artikeln aufweisen. Weiterhin kann die Anordnung dieser Artikel in der Zusammenstellung vorgegeben sein. Über einen weiteren Zeitraum kann eine weitere Zusammenstellung aus Artikeln gebildet werden. Die zweite Zusammenstellung kann hierbei ebenso eine hinsichtlich des Zuordnungsmerkmals bestimmte Anzahl an Artikeln aufweisen. Ebenso kann die Anordnung dieser Artikel in der zweiten Zusammenstellung vorgegeben sein. Findet das vorliegende Verfahren für die Getränkeindustrie Anwendung, so kann es beispielsweise sein, dass die erste Zusammenstellung eine bestimmte Anzahl an Getränken mindestens einer ersten Sorte und eine bestimmte Anzahl an Getränken mindestens einer weiteren Sorte umfasst. Weiter kann es sein, dass die zweite Zusammenstellung eine bestimmte Anzahl an Getränken mindestens einer ersten Sorte und eine bestimmte Anzahl an Getränken mindestens einer weiteren Sorte umfasst. Ebenso können die Anordnung der Artikel und/oder die Transportreihenfolge, in der sie an eine nachfolgende Behandlungsstation weitergegeben und/oder weitergeführt werden, variieren. Die Zusammenstellung kann hierbei diejenigen Artikel umfassen, welche bei späterer Verpackung für ein Mischgebinde bzw. ein Regenbogengebinde mit mehreren unterschiedlichen Artikeln und insbesondere Getränkesorten vorgesehen sind.

Zur Bildung der Zusammenstellung von Artikeln werden ein oder mehrere Artikel in Abhängigkeit ihres Zuordnungsmerkmals in einer eigenen Pufferstation gespeichert. Werden die Artikel in Abhängigkeit ihres Zuordnungsmerkmals aus dem Massenstrom an eine eigene Gasse weitergegeben, so kann jeder Gasse genau eine Pufferstation zugeordnet sein. Für den Fachmann ist klar, dass er einer oder mehreren der Gassen auch zwei oder mehrere Pufferstationen zum Speichern von Artikeln zuordnen kann. Denkbar ist zudem, dass die Artikel durch die Gassen direkt zur jeweiligen Pufferstation geführt und befördert werden. Da Artikel mit identischem Zuordnungsmerkmal in einer eigenen Gasse befördert werden, befinden sich in einer Pufferstation ebenso lediglich Artikel mit identischem Zuordnungsmerkmal. Beispielsweise können sich in jeder der Pufferstation lediglich identische Getränkesorten befinden.

Zudem werden gespeicherte Artikel unter Berücksichtigung der vorgegebenen Zusammenstellung aus einer oder mehreren der Pufferstationen in definierter Reihenfolge und/oder Anordnung an eine Behandlungsstation weitergegeben und/oder weitergeführt. Hierbei ist vorstellbar, dass die Weitergabe und/oder das Weiterführen von Artikeln an eine Behandlungsstation aktiv oder passiv erfolgt. In einer Ausführungsform der vorliegenden Erfindung kann einer oder mehreren der Pufferstationen ein Gassenende nachgeordnet sein, in welchem sich Artikel mit identischem Zuordnungsmerkmal bis zur Pufferstation aufstauen können. Werden ein oder mehrere Artikel aus dem jeweiligen Gassenende an eine Behandlungsstation weitergegeben und/oder weitergeführt, so rückt der nachfolgende Artikel aus der jeweiligen Pufferstation in das Gassenende nach und wird aus der Pufferstation ausgelagert.

Die definierte Reihenfolge kann beispielsweise derart vorgegeben sein, dass einem oder mehreren Artikeln mit erstem Zuordnungsmerkmal ein oder mehrere Artikel mit zweitem Zuordnungsmerkmal folgen. Weiter kann die definierte Anordnung derart vorgegeben sein, dass ein oder mehrere Artikeln mit erstem Zuordnungsmerkmal neben bzw. benachbart zu einem oder mehreren Artikeln mit zweitem Zuordnungsmerkmal an die Behandlungsstation weitergegeben und/oder weitergeführt werden.

In einer bevorzugten Ausführungsform der vorliegenden Erfindung sind ein oder mehrere der Pufferstationen aktiv steuerbar ausgebildet, so dass bei Weitergabe und/oder Weiterführung ein oder mehrerer Artikel an die Behandlungsstation Artikel mit gleichem Zuordnungsmerkmal aus der jeweiligen Pufferstation gesteuert ausgelagert werden. Bei Auslagerung können die jeweiligen Artikel ebenso an ein Gassenende weitergeführt werden. Auch können die Artikel im Bereich des Gassenendes aufgestaut werden.

Zudem kann sämtlichen Pufferstationen eine Übergabe- und/oder Transfereinheit nachgeordnet sein, welche Artikel unter Berücksichtigung der vorgegebenen Zusammenstellung an ein oder mehrere in Richtung der Behandlungsstation führende Horizontalfördereinrichtungen übergibt. Die nachgeordnete Übergabe- und/oder Transfereinheit kann beispielsweise durch verstellbare Weichen, ein oder mehrere Greifeinrichtungen und/oder einen oder mehrere Verteilsterne ausgebildet sein. Bevorzugt kann das Verfahren derart ausgebildet sein, dass nach Übergabe der Artikel an die ein oder mehreren Horizontalfördereinrichtungen die vorgegebene Artikelzusammenstellung ausgebildet ist. Beispielsweise kann für sämtliche Artikel eine gemeinsame nachgeordnete Übergabe- und/oder Transfereinheit vorhanden sein. Auch kann für einen oder mehrere Artikel mit identischem Zuordnungsmerkmal eine eigene nachgeordnete Übergabe- und/oder Transfereinheit vorhanden sein. Die nachgeordnete Übergabe- und/oder Transfereinheit kann ebenso über eine geeignete Sensorik verfügen, um defekte und/oder beschädigte Artikel aussortieren zu können. Auch können in einer Ausführungsform der vorliegenden Erfindung defekte und/oder beschädigte Artikel an eine Ausführgasse weitergeleitet werden

Bei der Behandlungsstation kann es sich beispielsweise um eine oder mehrere Füllstationen handeln. Auch ist vorstellbar, dass es sich bei der Behandlungsstation um eine Etikettierungsstation und/oder um eine Verpackungsstation und/oder um weitere Stationen handelt. Es kann hierbei vorgesehen sein, dass einer Behandlungsstation weitere Behandlungsstationen folgen.

Denkbar ist zudem, dass vor Zuführung identisch ausgebildeter Artikel an ihre jeweilige Gasse sämtliche Artikel bearbeitet werden und hierauf mehrere Artikel mit unterschiedlichem Zuordnungsmerkmal gemeinsam in dem Massenstrom weiterbefördert werden. Die Beförderung der Artikel mit unterschiedlichem Zuordnungsmerkmal im Massenstrom kann hierbei homogen verteilt oder inhomogen verteilt ausgebildet sein. Beispielsweise können die Artikel über eine oder mehrere Etikettier- und/oder Füllvorrichtungen und/oder weitere Vorrichtungen vor Zuführung an ihre jeweilige Pufferstation bearbeitet werden.

Bevorzugt sind zur Bearbeitung der Artikel mehrere parallele Bearbeitungsstationen vorgesehen. Die Artikel können hierbei jeweils an eine Bearbeitungsstation weitergegeben werden. Sind die mehreren Bearbeitungsstationen beispielsweise als Etikettiervorrichtungen ausgebildet, so können die Etikettiervorrichtungen jeweils identische Etikettieraggregate oder unterschiedliche Etikettieraggregate umfassen. Umfassen die Etikettiervorrichtungen identische Etikettieraggregate, so ist keine selektive Zuführung der Artikel hinsichtlich ihres Zuordnungsmerkmals an die jeweilige Etikettiervorrichtung notwendig. Vielmehr können die Artikel beliebig einer der Bearbeitungsstationen bzw. einer der Etikettiervorrichtungen zugeführt werden. Beispielsweise können die Etikettiervorrichtungen über eine geeignete Sensorik zur Erkennung des Zuordnungsmerkmals verfügen und somit unter Berücksichtigung des jeweiligen Zuordnungsmerkmals ein geeignetes Etikettieraggregat zur Bearbeitung wählen. Sollen beispielsweise unterschiedliche Getränkesorten etikettiert werden, so kann die Etikettiervorrichtung derart ausgebildet sein, dass sie mittels Sensorik die zu bearbeitende bzw. zu etikettierende Getränkesorte erkennt und hierauf ein geeignetes Etikettieraggregat wählen kann und/oder die Bearbeitung der jeweiligen Getränkesorte an einem geeigneten Etikettieraggregat erfolgt.

In einer weiteren Ausführungsform der Erfindung kann es sein, dass mehrere Etikettiervorrichtungen vorhanden sind und die mehreren Etikettiervorrichtungen über unterschiedliche Etikettieraggregate verfügen. In dieser Ausführungsform müssen die Artikel hinsichtlich ihres Zuordnungsmerkmals der jeweils geeigneten Etikettiervorrichtung zugeführt werden. Beispielsweise können für diese selektive Zuführung geeignete Übergabe- und/oder Transfereinheiten vorgesehen sein, die mittels Sensorik das jeweilige Zuordnungsmerkmals erkennen und hierauf eine Weitergabe und/oder Weiterführung der Artikel an die jeweilige Bearbeitungsstation bzw. Etikettiervorrichtung bewirken. Auch kann der Übergabe- und/oder Transfereinheit eine weitere Bearbeitungsstation vorgeordnet sein, von welcher Artikel im Massenstrom entgegen der Übergabe- und/oder Transfereinheit befördert werden. Die vorgeordnete Bearbeitungsstation kann beispielsweise als Behälterblasmaschine und/oder als Füllstation und/oder als weitere Station ausgebildet sein.

Es ist klar, dass der jeweiligen Bearbeitungsstation ein oder mehrere Horizontalfördereinrichtung vor- und/oder nachgeordnet sein können, um Artikel vor und/oder nach Bearbeitung der jeweiligen Bearbeitungsstation zuführen und/oder von der jeweiligen Bearbeitungsstation abführen zu können.

Erfindungsgemäß wird bei Unterschreiten einer gewissen gespeicherten Artikelzahl in einer oder mehreren Pufferstationen ein Signal an eine den Pufferstationen vorgeordnete Bearbeitungsstation und/oder eine den Pufferstationen vorgeordnete Fertigungsstation ausgegeben, welche hierauf Artikel mit für die jeweilige Pufferstation vorgesehenem Zuordnungsmerkmal über den Massenstrom an die jeweilige Pufferstation weiterführt. Hierbei müssen Artikel von der jeweiligen Bearbeitungsstation und/oder Fertigungsstation nicht direkt an den Massenstrom weitergeführt werden, auch können diese ggf. ein oder mehrere Bearbeitungsstationen passieren, bevor sie dem Massenstrom zugeführt werden. Erfindungsgemäß stehen die ein oder mehreren Pufferstationen mit einer Steuereinheit in Verbindung, die unter Berücksichtigung eines ausgegebenen Signals eine den Pufferstationen vorgeordnete Bearbeitungsstation und/oder eine den Pufferstationen vorgeordnete Fertigungsstation steuert. Erfindungsgemäß wird bei Unterschreiten einer gewissen Mindestartikelzahl im Pufferspeicher ein Signal ausgegeben. Auch kann es sein, dass bei Überschreiten einer gewissen Maximalartikelzahl im Pufferspeicher ein Signal ausgegeben wird. Bei der Fertigungsstation kann es sich beispielsweise um eine Behälterblasstation und/oder weitere Stationen handeln. Bei der Bearbeitungsstation kann es sich beispielsweise um eine Etikettiervorrichtung und/oder weitere Vorrichtungen handeln. Es ist denkbar, dass sowohl eine Bearbeitungsstation, wie beispielsweise eine Etikettiervorrichtung, als auch eine Fertigungsstation, wie beispielsweise eine Behälterblasmaschine, mit einer Steuereinheit verbunden sind, welche die Bearbeitungsstation und die Fertigungsstation steuert.

Die Erfindung betrifft zudem ein System zum Ordnen mehrerer in einem Massenstrom bewegter Artikel, bei welchen hinsichtlich eines Zuordnungsmerkmals identisch ausgebildete Artikel über eine erste Übergabe- und/oder Transfereinheit aus dem Massenstrom einer eigenen Pufferstation zuführbar sind. Die Pufferstationen sind hierbei derart ausgebildet, dass unter Berücksichtigung einer vorgegebenen Zusammenstellung Artikel aus einer oder mehreren der Pufferstationen auslagerbar und über eine den Pufferstationen nachgeordnete Übergabe- und/oder Transfereinheit in definierter Reihenfolge und/oder Anordnung an eine Behandlungsstation weitergebbar und/oder weiterführbar sind. Analog zum erfindungsgemäßen Verfahren können ebenso das erfindungsgemäße System betreffend Artikel vor Zuführung an die jeweilige Pufferstation bearbeitet werden. Es kann sein, dass hierfür zwei parallele Bearbeitungsstationen und insbesondere Etikettiervorrichtungen vorgesehen sind, wobei mindestens eine der parallelen Etikettiervorrichtungen über mindestens zwei unterschiedliche Etikettieraggregate verfügt. Soll ein Artikel durch die jeweilige Etikettiervorrichtung bearbeitet werden, so können die Etikettiervorrichtungen über eine geeignete Sensorik zur Erkennung der Artikel hinsichtlich ihres Zuordnungsmerkmals verfügen. Nach Erkennung des Zuordnungsmerkmals kann durch die Etikettiervorrichtung das jeweilige Etikettieraggregat für den zu bearbeitenden Artikel selektiv gewählt werden.

Außerdem kann den Bearbeitungsstationen bzw. den Etikettiervorrichtungen mindestens eine Behandlungsstation und/oder eine Fertigungsstation vorgeordnet sein. Beispielsweise kann es sich bei der Behandlungsstation und/oder der Fertigungsstation um eine Behälterblasmaschine und/oder um eine Füllstation und/oder um weitere Stationen handeln. In einer Ausführungsform der vorliegenden Erfindung kann es sein, dass dieser Behandlungsstation und/oder Fertigungsstation eine Übergabe- und/oder Transfereinheit nachgeordnet ist, welche die Artikel an die weiteren Bearbeitungsstationen bzw. die weiteren Etikettiervorrichtungen weiterleitet.

In einer bevorzugten Ausführungsform ist mindestens eine Übergabe- und/oder Transfereinheit als Verteilstern mit Sensorik zur Erkennung des Zuordnungsmerkmals ausgebildet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Ausführungsform eines erfindungsgemäßen Systems, wie es für eine Ausführungsform eines erfindungsgemäßen Verfahrens Verwendung finden kann;
Figur 2a zeigt eine schematische Ansicht zweier Zusammenstellungen an Artikeln mit unterschiedlichen Zuordnungsmerkmalen, wie sie durch das erfindungsgemäße Verfahren und das erfindungsgemäße System gebildet werden können.
Figur 2b zeigt eine weitere schematische Ansicht zweier Zusammenstellungen an Artikeln mit unterschiedlichen Zuordnungsmerkmalen, wie sie durch das erfindungsgemäße Verfahren und das erfindungsgemäße System gebildet werden können.
Figur 3 zeigt ein Flussdiagramm von einzelnen Schritten, wie sie Gegenstand des erfindungsgemäßen Verfahrens sein können bzw. wie sie das erfindungsgemäße System umsetzen kann.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäß System oder das erfindungsgemäße Verfahren ausgestaltet sein können und stellen keine abschließende Begrenzung dar.

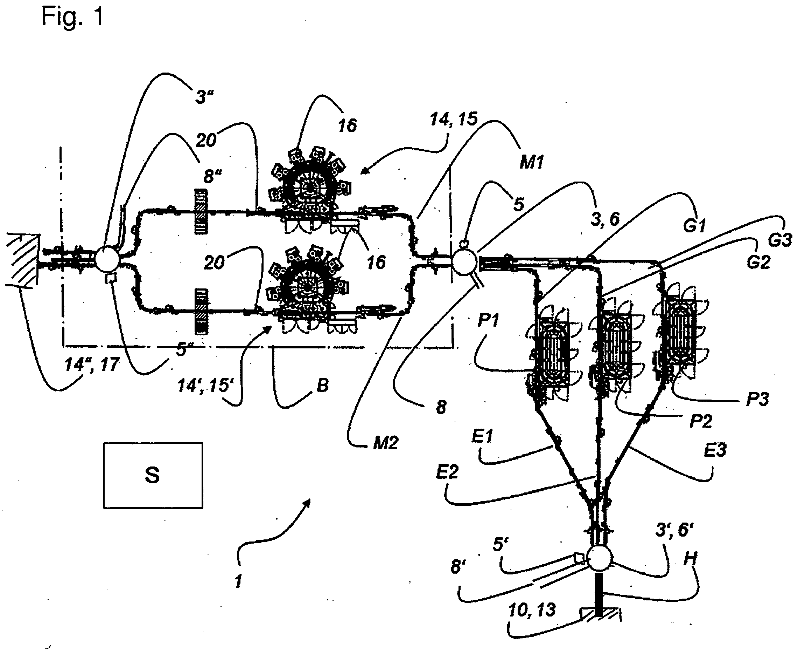

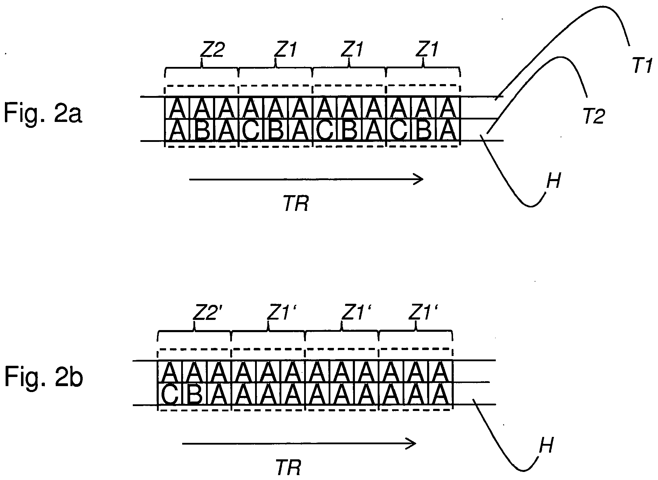

**Figur 1** zeigt eine schematische Ansicht einer Ausführungsform eines erfindungsgemäßen Systems 1, wie es für eine Ausführungsform eines erfindungsgemäßen Verfahrens Verwendung finden kann. Das System 1 ist vorgesehen zum Ordnen mehrerer in zwei parallelen Massenströmen M1 und M2 bewegter Artikel, welche als Artikel mit unterschiedlichem Zuordnungsmerkmal A, B und C und vorliegend als unterschiedliche Getränkesorten (vgl. Figur 2) ausgebildet sind. Sowohl der Massenstrom M1 als auch der Massenstrom M2 umfassen im gezeigten Ausführungsbeispiel mehrere Artikel mit unterschiedlichen Zuordnungsmerkmalen A, B, C bzw. unterschiedliche Getränkesorten. Beide Massenströme M1 und M2 führen entgegen einer gemeinsamen Übergabe- und/oder Transfereinheit 3, welche vorliegend als Verteilstern 6 mit optischer Sensorik 5 ausgebildet ist. Der Verteilstern 6 ist über seine Sensorik 5 in der Lage, Artikel hinsichtlich ihres Zuordnungsmerkmals A, B bzw. C identifizieren zu können. Weiter kann die Übergabe- und/oder Transfereinheit 5 bzw. der Verteilstern 6 Artikel, welche hinsichtlich des Zuordnungsmerkmals A, B oder C identisch ausgebildet sind, aus dem Massenstrom M1 und aus dem Massenstrom M2 über die Gassen G1, G2 und G3 einer eigenen Pufferstation P1, P2 oder P3 zuführen. Über seine Sensorik 5 ist die Übergabe- und/oder Transfereinheit 3 bzw. der Verteilstern 6 zudem in der Lage, defekte oder beschädigte Artikel zu erkennen und über das Ausschleusband 8 anstelle einer Zuführung an die jeweilige Pufferstation P1, P2 oder P3 auszusondern. In den Pufferstationen P1, P2 und P3 werden somit lediglich Artikel mit identischem Zuordnungsmerkmal bzw. gleiche Getränkesorten gespeichert. In der Pufferstation P1 sind somit lediglich Artikel mit Zuordnungsmerkmal A, in der Pufferstation P2 lediglich Artikel mit Zuordnungsmerkmal B und in der Pufferstation P3 lediglich Artikel mit Zuordnungsmerkmal C gespeichert. Somit werden in der Gasse G1 lediglich Artikel mit Zuordnungsmerkmal A, in der Gasse G2 lediglich Artikel mit Zuordnungsmerkmal B und in der Gasse G3 lediglich Artikel mit Zuordnungsmerkmal C geführt. Wie in Figur 1 zu erkennen, ist jeder Pufferstation P1, P2 und P3 jeweils ein Gassenende E1, E2 und E3 nachgeordnet. Im Gassenende E1 befinden lediglich Artikel mit Zuordnungsmerkmal A während sich im Gassenende E2 lediglich Artikel mit Zuordnungsmerkmal B und im Gassenende E2 lediglich Artikel mit Zuordnungsmerkmal C befinden. Eine weitere Übergabe- und/oder Transfereinheit 3', welche ebenso als Verteilstern 6' ausgebildet ist, gibt in definierter Reihenfolge und Anordnung (vgl. Figur 2) an die Horizontalfördereinrichtung H Artikel mit Zuordnungsmerkmal A, B und C weiter, und führt diese zur Behandlungsstation 10. Auf der Horizontalfördereinrichtung H wurden somit die Artikel bzw. vorliegend die Getränkesorten in vorgegebener Zusammenstellung durch die weitere Übergabe- und/oder Transfereinheit 3' angeordnet. Über die Sensorik 5' ist ebenso die weitere Übergabe- und/oder Transfereinheit 3' in der Lage, defekte und/oder beschädigte Artikel zu erkennen und über das Ausschleusband 8' auszusondern. Die Behandlungsstation 10 ist vorliegend als Füllstation 13 ausgebildet, kann jedoch ebenso beispielsweise als Verpackungsstation oder als Etikettiervorrichtung oder als weitere Station ausgebildet sein. Aus den Pufferstationen P1, P2 und P3 werden Artikel bzw. Getränkesorten derart ausgelagert, dass die weitere Übergabe- und/oder Transfereinheit 6' bei Bedarf Zugriff auf den jeweiligen Artikel mit Zuordnungsmerkmal A, B und C bzw. die jeweilige Getränkesorte zur Bildung der vorgegebenen Zusammenstellung hat. Beispielsweise kann hierzu in jedem Gassenende E1, E2 und E3 jeweils mindestens ein Artikel mit jeweiligem Zuordnungsmerkmal A, B bzw. C vorhanden sein. In der Praxis haben sich Systeme 1 bewährt, bei welchen in jedem Gassenende E1, E2 und E3 im Bereich der weiteren Übergabe- und/oder Transfereinheit 3' jeweils mindestens ein Artikel, bevorzugt jedoch mehrere Artikel, anstehen. Jegliche Zusammenstellung, welche Artikel mit den Zuordnungsmerkmalen A, B und C umfasst, kann somit durch die weitere Übergabe- und/oder Transfereinheit 3' auf der Horizontalfördereinrichtung H gebildet werden. In Figur 1 ist mit Bezugsziffer S eine Steuerungseinheit symbolisch dargestellt. Die Steuerungseinheit S steht mit der weiteren Übergabe- und/oder Transfereinheit 3' und den Pufferstationen P1, P2 und P3 in Verbindung. Werden ein oder mehrere Artikel aus dem Gassenend E1 und/oder E2 und/oder E3 durch die weitere Übergabe- und/oder Transfereinheit 3' entnommen, so gibt die Steuerungseinheit S ein Signal an den jeweiligen Pufferspeicher P1 und/oder P2 und oder P3 um an das jeweilige Gassenende E1 und/oder E2 und oder E3, aus welchem ein Artikel entnommen wurde, einen weiteren Artikel nachzuführen bzw. aus der jeweiligen Pufferstation P1 und/oder P2 und/oder P3 auszulagern.

Der Übergabe- und/oder Transfereinheit 3 sind in Figur 1 zwei parallele Bearbeitungsstationen 14 und 14' vorgeordnet, welche vorliegend als Etikettiervorrichtungen 15 und 15' ausgebildet sind. Durch die Etikettiervorrichtungen 15 und 15' bearbeitete Artikel werden im Massenstrom M1 oder M2 an die Übergabe- und/oder Transfereinheit 3 weitergeführt. Im gezeigten Ausführungsbeispiel verfügt jede Etikettiervorrichtung 15 und 15' über unterschiedliche Etikettieraggregate 16, um Artikel sämtliche Artikel mit Zuordnungsmerkmal A, B oder C bearbeiten zu können. Hierfür besitzt jede Etikettiervorrichtung 15 und 15' eine eigene Sensorik 20 um vor Bearbeitung eines Artikel in Abhängigkeit seines Zuordnungsmerkmals A, B oder C ein passendes Etikettieraggregat 16 wählen zu können. Ferner ist eine dritte Übergabe- und/oder Transfereinheit 3" dargestellt. Analog zur Übergabe- und/oder Transfereinheit 3 und analog zur nachgeordneten Übergabe -und/oder Transfereinheit 3' verfügt ebenso die dritte Übergabe- und/oder Transfereinheit 3" über eine geeignete Sensorik 3" um defekte und/oder beschädigte Artikel erkennen zu können und über das Ausschleusband 8" auszusondern. Da die Etikettiervorrichtungen 15 und 15' zur Bearbeitung von Artikeln unabhängig von ihrem Zuordnungsmerkmal A, B oder C vorgesehen sind, kann die dritte Übergabe- und/oder Transfereinheit 3" eine willkürliche Verteilung von Artikeln ohne Berücksichtigung ihres Zuordnungsmerkmals A, B oder C an die Etikettiervorrichtungen 15 oder 15' vornehmen. Artikel können jedoch durch die dritte Übergabe- und/oder Transfereinheit 3" hinsichtlich Anzahl homogen an die Bearbeitungsstationen 14 und 14' verteilt werden. Weist eine der beiden Etikettiervorrichtungen 15 oder 15' bzw. eine der beiden Bearbeitungsstationen 14 oder 14' einen Defekt auf, so kann die Steuerungseinheit S die dritte Übergabe- und/oder Transfereinheit 3" derart steuern, dass bis zur Behebung des Defektes Artikel lediglich an die intakte Etikettiervorrichtung 15 oder 15' bzw. die intakte Bearbeitungsstation 14 oder 14' weitergegeben bzw. weitergeführt werden. Auch während Umrüstarbeiten an einer der Etikettiervorrichtungen 15 oder 15' kann in der in Figur 1 gezeigten Ausführungsform die Steuerungseinheit S die dritte Übergabe- und/oder Transfereinheit 3" derart steuern, dass bis zum Abschluss der jeweiligen Umrüstarbeit Artikel nicht an die umzurüstende Etikettiervorrichtung 15 bzw. 15' weitergegeben bzw. weitergeführt werden. Da die Bearbeitungsstationen 14 und 14' Artikel unabhängig von ihrem Zuordnungsmerkmal A, B und C bearbeiten können, sind die Artikel im Bereich B hinsichtlich ihres Zuordnungsmerkmals A, B und C ungeordnet. Nach Weitergabe bzw. Weiterführung der Artikel an die Gassen G1, G2 bzw. G3 sind die Artikel außerhalb des Bereichs B geordnet. Gegensätzliches hierzu kann es sein, dass über die dritte Übergabe- und/oder Transfereinheit 3" bereits ein Ordnen von Artikeln erfolgt bzw. dass über die dritte Übergabe- und/oder Transfereinheit 3" Artikel in Abhängigkeit ihres Zuordnungsmerkmals A, B oder C an jeweils eine Bearbeitungsstation 14 oder 14 bzw. eine Etikettiervorrichtung 15 bzw. 15' weitergeführt werden. Hierbei besitzen die Etikettiervorrichtungen 15 bzw. 15' ein oder mehrere unterschiedliche Etikettieraggregate 16. Zudem ist der dritten Übergabe- und/oder Transfereinheit 3" eine dritte Bearbeitungsstation 14" vorgeordnet, welche vorliegend als Fertigungsstation 17 ausgebildet ist, vorgeordnet. Beispielsweise kann es sich bei der Fertigungsstation 17 um eine Streckblasmaschine oder weitere Stationen handeln. Ausgehend von der dritten Bearbeitungsstation 14" bzw. von der Fertigungsstation 17 werden Artikel im Ausführungsbeispiel der Figur 1 dreibahnig transportiert und nach der dritten Übergabe- und/oder Transfereinheit 3" zweibahnig weitergeführt. Die dritte Bearbeitungsstation 14" ist über die Steuereinheit S mit den Pufferstätionen P1 und P2 und P3 derart in Wirkzusammenhang gebracht, dass bei Überschreiten und Unterschreiten einer gewissen gespeicherten Artikelzahl ein Signal an die Fertigungsstation 17 ausgegeben wird. Diese führt hierauf Artikel mit jeweiligem Zuordnungsmerkmal A, B oder C über die Bearbeitungsstationen 14 und 14' und über die Massenströme M1 und M2 an die jeweilige Pufferstation P1, P2 oder P3 weiter oder unterbindet das Weiterführen der Artikel mit jeweiligem Zuordnungsmerkmal A, B oder C an die jeweiligen Pufferstation P1, P2 oder P3. Hierdurch kann gewährleistet werden, dass die Pufferstationen P1 und P2 und P3 immer über ausreichend Artikel mit jeweiligem Zuordnungsmerkmal A, B oder C verfügen, um der nachgeordneten Übergabe- und/oder Transfereinheit 3' stets ausreichend Artikel mit Zuordnungsmerkmal A, B und C zur Bildung der Zusammenstellung zur Verfügung stellen zu können. Es ist für den Fachmann klar, dass er sowohl für die Behandlungsstation 10, als auch für die Bearbeitungsstationen 14 unterschiedliche Einrichtungen verwenden kann. Beispielsweise können die Behandlungsstation 10 und die Bearbeitungsstationen 14, 14' und 14" als Streckblasmaschine und/oder als Etikettiervorrichtung und/oder als Füllstation und/oder als Verpackungsstation und/oder als weitere Stationen ausgebildet sein.

**Figur 2a** zeigt eine schematische Ansicht zweier Zusammenstellungen Z1 und Z2 an Artikeln mit unterschiedlichen Zuordnungsmerkmalen A, B und C, wie sie durch das erfindungsgemäße Verfahren und das erfindungsgemäße System 1 gebildet werden können. Die Zusammenstellungen Z1 und Z2 umfassen jeweils Artikel welche auf einer ersten Transportstrecke T1 und weitere Artikel welche auf einer Transportstrecke T2 transportiert werden. Artikel der ersten Transportstrecke T1 werden hierbei benachbart zu Artikeln der zweiten Transportstreckt T2 transportiert. Zu erkennen ist die bereits in Figur 1 dargestellte Horizontalfördereinrichtung H, welche die Artikel auf den Transportstrecken T1 oder T2 transportiert, und deren Transportrichtung mit TR angedeutet ist. Hierbei wurden drei erste Zusammenstellungen Z1 und anschließend eine zweite Zusammenstellung Z2 durch die in Figur 1 gezeigte nachgeordnete Übergabe- und/oder Transfereinheit 3' bzw. durch den Verteilstern 6' gebildet. Wie zu erkennen, umfassen die erste Zusammenstellung Z1 und die zweite Zusammenstellung Z2 je sechs Artikel. Diese Anzahl wurde im Ausführungsbeispiel der Figur 2a für die erste Zusammenstellung Z1 und für die zweite Zusammenstellung Z2 zwar identisch und definiert gewählt, kann jedoch in weiteren Ausführungsformen ebenso unterschiedlich ausgebildet sein. Es ist klar, dass der Zusammenstellung Z2 auch weitere Zusammenstellungen folgen können oder dass der Zusammenstellung Z1 auch weiter Zusammenstellungen vorausgehen können, die sich von den gezeigten Zusammenstellungen Z1 und Z2 hinsichtlich Anzahl der Artikel und Anordnung betreffend ihr jeweiliges Zuordnungsmerkmal A und/oder B und/oder C unterscheiden. Die Zusammenstellung Z1 umfasst vier Artikel mit Zuordnungsmerkmal A und je zwei weitere Artikel mit Zuordnungsmerkmal B und C Die Zusammenstellung Z2 umfasst fünf Artikel mit Zuordnungsmerkmal A und einen weiteren Artikel mit Zuordnungsmerkmal B. Die Artikel mit Zuordnungsmerkmal A betreffen eine erste Getränkesorte, die Artikel mit Zuordnungsmerkmal B eine zweite Getränkesorte und die Artikel mit Zuordnungsmerkmal C eine dritte Getränkesorte. Die Transportreihenfolge der Artikel in Transportrichtung TR bzw. die Anordnung der Artikel ist in Abhängigkeit ihres Zuordnungsmerkmals A, B und C und der vorgegebenen Zusammenstellung Z1 bzw. Z2 definiert vorgegeben. Eine Zusammenstellung Z1 bzw. Z2 kann mehrere nebeneinander und auf unterschiedlichen Transportstrecken T1 und T2 transportiere Artikel mit gleichen oder unterschiedlichen Zuordnungsmerkmalen umfassen. Auch kann es sein, dass zwischen einzelnen Artikeln oder einzelnen Zusammenstellungen Z1, Z2 eine "Lücke" in Transportrichtung TR vorhanden ist, so dass die Artikel bzw. die Zusammenstellungen Z1, Z2 nicht direkt aneinander anstehen

**Figur 2b** zeigt eine weitere schematische Ansicht zweier Zusammenstellungen Z1' und Z2' an Artikeln mit unterschiedlichen Zuordnungsmerkmalen A, B und C, wie sie durch das erfindungsgemäße Verfahren und das erfindungsgemäße System 1 gebildet werden können. Hierbei umfasst die Zusammenstellung Z1 lediglich Artikel mit Zuordnungsmerkmal A. Hingegen umfasst die zu einem späteren Zeitpunkt durch die nachfolgende Übergabe- und/oder Transfereinheit 3' (vgl. Figur 1) gebildete Zusammenstellung Z2' Artikel mit Zuordnungsmerkmalen A, B und C. Nach Bildung einer Zusammenstellung Z1 ist die Pufferstation P1, welche für das Speichern von Artikeln vorgesehen ist, in der Lage, durch Auslagern von Artikeln mit Zuordnungsmerkmal A die nachgeordnete Übergabe- und/oder Transfereinheit 3' mit ausreichend Artikeln zu versorgen um die vorgegebene Zusammenstellung Z1' bilden zu können. Aus den weiteren Pufferstationen P2 und P3 werden hierbei keine Artikel mit Zuordnungsmerkmal B und C ausgelagert, da diese Artikel nicht für die Zusammenstellung Z1' benötigt werden. Soll hierauf folgend die Zusammenstellung Z2' gebildet werden, so können ebenso durch die Pufferstationen P2 und P3 Artikel mit Zuordnungsmerkmal B und C ausgelagert werden, um durch die Übergabe- und/oder Transfereinheit 3' die Zusammenstellung Z2' bilden zu können. Die Auslagerung von Artikeln mit jeweiligen Zuordnungsmerkmal A, B und C aus den jeweiligen Pufferstationen P1, P2 und P3 kann derart erfolgen, dass genau die Anzahl an Artikeln mit Zuordnungsmerkmal A, B und C ausgelagert wird, wie sie durch die nachfolgende Übergabe- und/oder Transfereinheit 3' zum Bilden der jeweiligen Zusammenstellung Z1 bzw. Z2 benötigt wird. Ggf. kann eine Steuereinheit S (vgl. Figur 1) vorhanden sein, welche ein oder mehrere Bearbeitungsstationen 14, 14' und/oder 14" steuert und den jeweiligen Pufferstationen P1, P2 und/oder P3 unter Berücksichtigung der Zusammenstellung Z1' bzw. Z2' Artikel zuführt.

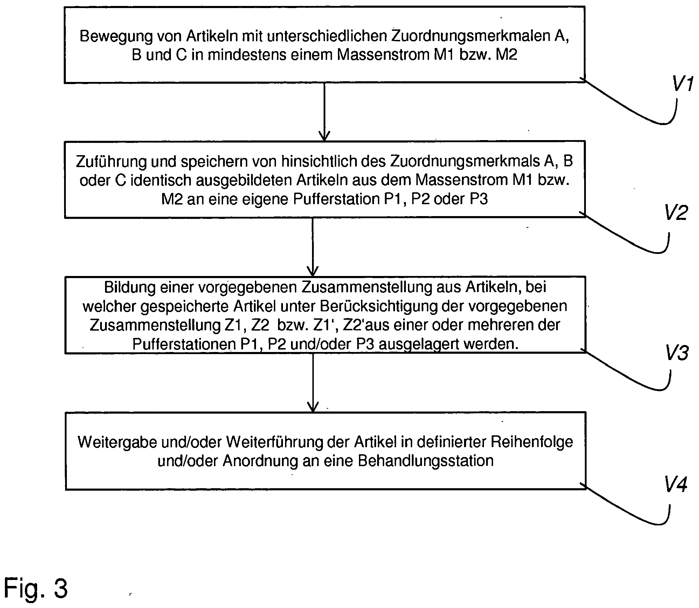

**Figur 3** zeigt ein Flussdiagramm von einzelnen Schritten V1-V4, wie sie Gegenstand des erfindungsgemäßen Verfahrens sein können bzw. wie sie das erfindungsgemäße System 1 umsetzen kann. So werden in einem ersten Verfahrensschritt V1 Artikel mit unterschiedlichen Zuordnungsmerkmalen A, B und C in mindestens einem Massenstrom M1, bevorzugt jedoch in mindestens zwei Massenströmen M1 und M2, bewegt. Aus dem mindestens einen Massenstrom M1 und M2 werden hierauf Artikel, welche hinsichtlich ihres Zuordnungsmerkmals A, B oder C identisch ausgebildet sind, jeweils einer eigenen Pufferstation P1, P2 oder P3 zugeführt. Das Zuführen kann, wie in Figur 1 gezeigt, durch eine Übergabe- und/oder Transfereinheit 3 und über die den Pufferstationen P1, P2 und P3 zugeordnete Gassen G1, G2 und G3 erfolgen. Anschließend wird in einem weiteren Verfahrensschritt V3 eine vorgegebene Zusammenstellung Z1 oder Z2 bzw. Z1' oder Z2' (vgl. Figur 2a und Figur 2b) gebildet. Hierfür werden Artikel aus einer oder mehreren der Pufferstationen P1, P2 und/oder P3 ausgelagert. In einem weiteren Verfahrensschritt V4 werden die Artikel in definierter Reihenfolge und Anordnung an die Behandlungsstation 10 (vgl. Figur 1) weitergegeben und/oder weitergeführt. Beispielsweise kann die Weitergabe und/oder das Weiterführen durch eine nachgeordnete Übergabe- und/oder Transfereinheit 3', wie im Ausführungsbeispiel der Figur 1 gezeigt, erfolgen. Die Übergabe- und/oder Transfereinheit 3' kann in einer bevorzugten Ausführungsform der vorliegenden Erfindung als Verteilstern 6' ausgebildet sein.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: System
- 3: Übergabe- und/oder Transfereinheit
- 5: Sensorik
- 6: Verteilstern
- 8: Ausschleusband
- 10: Behandlungsstation
- 13: Füllstation
- 14: Bearbeitungsstation
- 15: Etikettiervorrichtung
- 16: Etikettieraggregat
- 17: Fertigungsstation
- 20: Sensorik

- A-C: Zuordnungsmerkmal
- E: Endbereich
- G: Gasse
- H: Horizontalfördereinrichtung
- M: Massenstrom
- P: Pufferstation
- S: Steuerungseinheit
- V: Verfahrensschritte
- Z: Zusammenstellung

## Patentansprüche

1. Verfahren zum Ordnen mehrerer in mindestens einem Massenstrom (M1, M2) bewegter Artikel, bei welchem hinsichtlich eines Zuordnungsmerkmals (A, B, C) identisch ausgebildete Artikel aus dem mindestens einem Massenstrom (M1, M2) einer eigenen Pufferstation (P1, P2, P3) zugeführt und in der Pufferstation (P1, P2, P3) gespeichert werden, wobei anschließende eine vorgegebene Zusammenstellung (Z1, Z2) aus Artikeln gebildet wird, bei welcher gespeicherte Artikel unter Berücksichtigung der vorgegebenen Zusammenstellung (Z1, Z2) aus einer oder mehreren der Pufferstationen (P1, P2, P3) ausgelagert und in definierter Reihenfolge und/oder Anordnung an eine Behandlungsstation (10) weitergegeben und/oder weitergeführt werden, **dadurch gekennzeichnet, dass** bei Unterschreiten einer gewissen gespeicherten Artikelzahl in einer oder mehreren Pufferstationen (P1, P2, P3) ein Signal an eine den Pufferstationen (P1, P2, P3) vorgeordnete Bearbeitungsstation (14, 14', 14") und/oder eine den Pufferstationen (P1, P2, P3) vorgeordnete Fertigungsstation (17) ausgegeben wird, welche hierauf Artikel mit für die jeweilige Pufferstation (P1, P2, P3) vorgesehenem Zuordnungsmerkmal (A, B, C) über den Massenstrom (M1, M2) an die jeweilige Pufferstation (P1, P2, P3) weiterführen.

2. Verfahren nach Anspruch 1, bei welchem hinsichtlich eines Zuordnungsmerkmals (A, B, C) identisch ausgebildete Artikel aus dem Massenstrom (M1, M2) zunächst an eine eigene Gasse (G1, G2, G3) weitergegeben und/oder weitergeführt werden und über die jeweilige Gasse (G1, G2, G2) einer eigenen Pufferstation (P1, P2, P3) zugeführt werden.

3. Verfahren nach Anspruch 1 oder Anspruch 2, bei welchem vor Zuführung der Artikel an ihre jeweilige Pufferstation (P1, P2, P3) sämtliche Artikel bearbeitet werden und hierauf mehrere Artikel mit unterschiedlichem Zuordnungsmerkmal (A, B, C) gemeinsam in dem mindestens einem Massenstrom (M1, M2) weiterbefördert werden.

4. Verfahren nach Anspruch 3, bei welchem zur Bearbeitung der Artikel mehrere parallele Bearbeitungsstationen (14, 14') vorgesehen sind und bei welchem die Artikel an jeweils eine der Bearbeitungsstationen (14, 14') weitergegeben und/oder weitergeführt werden.

5. Verfahren nach Anspruch 4, bei welchem die Artikel in Abhängigkeit ihres Zuordnungsmerkmals (A, B, C) an die jeweilige Bearbeitungsstation (14, 14') weitergeben und/oder an die jeweilige Bearbeitungsstation (14, 14') weitergeführt werden.

6. Verfahren nach einem oder mehreren der vorhergehenden Ansprüche, bei welchem die Artikel nach Speichern in der jeweiligen Pufferstation (P1, P2, P3) in einem Gassenende (E1, E2, E3) aufgestaut werden und anschließend in vorbestimmter Transportreihenfolge und/oder Anordnung an die Behandlungsstation (10) weitergegeben und/oder weitergeführt werden.

7. Verfahren nach einem oder mehreren der vorhergehenden Ansprüche, bei welchem die Zuordnungsmerkmale (A, B, C) der jeweiligen Artikel vor Zuführung der Artikel an die jeweilige Pufferstation (P1, P2, P3) und/oder vor dem Bilden der vorgegebenen Zusammenstellung (Z1, Z2) sensorisch erfasst werden.

8. System (1) zum Ordnen mehrerer in mindestens einem Massenstrom (M1, M2) bewegter Artikel, bei welchem hinsichtlich eines Zuordnungsmerkmals (A, B, C) identisch ausgebildete Artikel über eine erste Übergabe- und/oder Transfereinheit (3) aus dem Massenstrom (M1, M2) einer eigenen Pufferstation (P1, P2, P3) zuführbar sind, wobei die Pufferstationen (P1, P2, P3) derart ausgebildet sind, dass unter Berücksichtigung einer vorgegebenen Zusammenstellung (Z1, Z2) Artikel aus einer oder mehreren der Pufferstationen (P1, P2, P3) auslagerbar und über eine den Pufferstationen (P1, P2, P3) nachgeordnete Übergabe- und/oder Transfereinheit (3') in definierter Reihenfolge und/oder Anordnung an eine Behandlungsstation (10) weitergebbar und/oder weiterführbar sind **dadurch gekennzeichnet, dass** die ein oder mehreren Pufferstationen (P1, P2, P3) mit einer Steuerungseinheit (S) in Verbindung stehen, die unter Berücksichtigung eines bei Unterschreiten einer gewissen Mindestartikelzahl in einer Pufferstation (P1, P2, P3) ausgegebenen Signals eine den Pufferstationen (P1, P2, P3) vorgeordnete Bearbeitungsstation (14) und/oder eine den Pufferstationen vorgeordnete Fertigungsstation (17) steuern kann.

9. System (1) nach Anspruch 8, wobei der Übergabe- und/oder Transfereinheit (3) mindestens zwei parallele Bearbeitungsstationen (14, 14') vorgeordnet sind, die als Etikettiervorrichtungen (15, 15') ausgebildet sind und wobei mindestens eine der parallelen Etikettiervorrichtungen (15, 15') über mindestens zwei unterschiedliche Etikettieraggregate (16) verfügt, die durch die jeweilige Etikettiervorrichtung (15, 15') in Abhängigkeit eines Zuordnungsmerkmals (A, B, C) des zu bearbeitenden Artikels selektiv wählbar sind.

10. System (1) nach Anspruch 9, bei welchem den Etikettiervorrichtungen (15, 15') mindestens eine Bearbeitungsstation (14") und/oder eine Fertigungsstation (17) vorgeordnet ist.

11. System (1) nach einem oder mehreren der Ansprüche 8 bis 10, bei welchem mindestens eine Übergabe- und/oder Transfereinheit (3, 3', 3") als Verteilstern (6, 6', 6") mit Sensorik (5, 5', 5") zur Erkennung des Zuordnungsmerkmals (A, B, C) ausgebildet ist.

## Claims

1. A method for arranging a plurality of articles being moved in at least one mass flow (M1, M2), in which method articles that are formed identically in respect of an allocation feature (A, B, C) are fed to a separate buffer station (P1, P2, P3) from the at least one mass flow (M1, M2) and are stored in the buffer station (P1, P2, P3), wherein a specified compilation (Z1, Z2) of articles is formed, for which specified compilation (Z1, Z2) stored articles are removed from one or more of the buffer stations (P1, P2, P3) in consideration of the specified compilation (Z1, Z2) and are forwarded and/or guided on to a treatment station (10) in a defined sequence and/or arrangement, **characterised in that** a signal is output to a processing station (14, 14', 14") arranged upstream of the buffer stations (P1, P2, P3) and/or to a manufacturing station (17) arranged upstream of the buffer stations (P1, P2, P3) upon falling below a certain number of articles stored in one or more buffer stations (P1, P2, P3), which processing station (14, 14', 14") and/or manufacturing station (17) then guides on the articles having the allocation feature (A, B, C) intended for the respective buffer station (P1, P2, P3) via the mass flow (M1, M2) to the respective buffer station (P1, P2, P3).

2. The method as recited in claim 1 wherein articles, which are formed identically in respect of an allocation feature (A, B, C), are first forwarded and/or guided on from the mass flow (M1, M2) to a separate lane (G1, G2, G3) and then fed to a separate buffer station (P1, P2, P3) along the respective lane (G1, G2, G3).

3. The method as recited in claim 1 or claim 2 wherein all articles are processed before being fed to their respective buffer station (P1, P2, P3), and then a plurality of articles with different allocation features (A, B, C) are conveyed on together in the at least one mass flow (M1, M2).

4. The method as recited in claim 3 wherein a plurality of parallel processing stations (14, 14') is provided for processing the articles and wherein the articles are forwarded and/or guided on in each case to one of the processing stations (14, 14').

5. The method as recited in claim 4 wherein the articles are forwarded to the respective processing station (14, 14') and/or guided on to the respective processing station (14, 14') in dependence on their allocation feature (A, B, C).

6. The method as recited in one or more of the previous claims wherein the articles are accumulated in a lane end section (E1, E2, E3), after being stored in the respective buffer station (P1, P2, P3), and then are forwarded and/or guided on to the handling station (10) in a predefined transport sequence and/or arrangement.

7. The method as recited in one or more of the previous claims in which the allocation features (A, B, C) of the respective articles are sensor-detected before the articles are fed to the respective buffer station (P1, P2, P3) and/or before the specified compilation (Z1, Z2) is formed.

8. A system (1) for arranging a plurality of articles being moved in at least one mass flow (M1, M2), in which system articles that are formed identically in respect of an allocation feature (A, B, C) are feedable from the mass flow (M1, M2) to a separate buffer station (P1, P2, P3) via a first delivery unit and/or transfer unit (3), wherein the buffer stations (P1, P2, P3) are designed such that articles may be removed in consideration of a specified compilation (Z1, Z2) from one or several of the buffer stations (P1, P2, P3), and the articles are forwardable and/or guidable in a defined sequence and/or in a defined arrangement on to a treatment station (10) via a delivery unit and/or a transfer unit (3'), which is arranged downstream of the buffer stations (P1, P2, P3), **characterised in that** the one or more buffer stations (P1, P2, P3) are in connection with a control unit (S), which can control a processing station (14) arranged upstream of the buffer stations (P1, P2, P3) and/or a manufacturing station (17) arranged upstream of the buffer stations (P1, P2, P3) in consideration of a signal, which is output upon falling below a certain minimum number of articles in a buffer station (P1, P2, P3).

9. The system (1) as recited in claim 8 wherein at least two parallel processing stations (14, 14'), which are designed as labeling apparatuses (15, 15'), are arranged upstream of the delivery unit and/or transfer unit (3), and wherein at least one of the parallel labeling apparatuses (15, 15') comprises at least two different labeling units (16), which are selectively selectable by the respective labeling apparatus (15, 15') in dependence on an allocation feature (A, B, C) of the article to be processed.

10. The system (1) as recited in claim 9 wherein at least one processing station (14") and/or the at least one manufacturing station (17) is arranged upstream of the labeling apparatuses (15, 15').

11. The system (1) as recited in one or more of the claims 8 to 10 wherein at least one delivery unit and/or transfer unit (3, 3', 3") is designed as a distribution star (6, 6', 6") having a sensor system (5, 5', 5") for detecting the allocation feature (A, B, C).

## Revendications

1. Procédé destiné à mettre en ordre une pluralité d'articles déplacés dans au moins un flux de masse (M1, M2), dans lequel des articles réalisés de manière identique quant à une caractéristique d'association (A, B, C) sont amenés à partir dudit au moins un flux de masse (M1, M2) à un propre poste tampon (P1, P2, P3) et sont stockés dans ledit poste tampon (P1, P2, P3), dans lequel, ensuite, une composition (Z1, Z2) prédéfinie d'articles est formée dans laquelle des articles stockés sont prélevés, compte tenu de ladite composition (Z1, Z2) prédéfinie, dans un ou plusieurs des postes tampons (P1, P2, P3) et sont transférés et/ou convoyés dans un ordre et/ou agencement défini(s) à un poste de traitement (10), **caractérisé par le fait que**, lorsqu'un certain nombre d'articles stockés dans un ou plusieurs poste(s) tampon(s) (P1, P2, P3) n'est pas atteint, un signal est émis à un poste de traitement (14, 14', 14") monté en amont des postes tampons (P1, P2, P3) et/ou à un poste de fabrication (17) monté en amont des postes tampons (P1, P2, P3), qui, à la suite de ceci, convoient, au poste tampon (P1, P2, P3) respectif, via le flux de masse (M1, M2), des articles ayant la caractéristique d'association (A, B, C) prévue pour le poste tampon (P1, P2, P3) respectif.

2. Procédé selon la revendication 1, dans lequel des articles réalisés de manière identique quant à une caractéristique d'association (A, B, C) sont transférés et/ou convoyés, à partir du flux de masse (M1, M2), d'abord à une propre ruelle (G1, G2, G3) et sont amenés via la ruelle (G1, G2, G3) respective à un propre poste tampon (P1, P2, P3).

3. Procédé selon la revendication 1 ou la revendication 2, dans lequel, avant d'amener les articles à leur poste tampon (P1, P2, P3) respectif, l'ensemble des articles est traité, et, à la suite de ceci, plusieurs articles ayant une caractéristique d'association (A, B, C) différente sont acheminés en commun dans ledit au moins un flux de mase (M1, M2).

4. Procédé selon la revendication 3, dans lequel plusieurs postes de traitement (14, 14') parallèles sont prévus pour traiter les articles, et dans lequel les articles sont transférés et/ou convoyés à respectivement l'un des postes de traitement (14, 14').

5. Procédé selon la revendication 4, dans lequel les articles sont transférés au poste de traitement (14, 14') respectif et/ou convoyés au poste de traitement (14, 14') respectif en fonction de leur caractéristique d'association (A, B, C).

6. Procédé selon l'une ou plusieurs des revendications précédentes, dans lequel les articles, après le stockage dans le poste tampon (P1, P2, P3) respectif, sont accumulés dans une extrémité de ruelle (E1, E2, E3) et sont transférés et/ou convoyés ensuite, dans un ordre de transport et/ou agencement prédéterminé(s), au poste de traitement (10).

7. Procédé selon l'une ou plusieurs des revendications précédentes, dans lequel les caractéristiques d'association (A, B, C) des articles respectifs sont détectées par capteur(s) avant d'amener les articles au poste tampon (P1, P2, P3) respectif et/ou avant de former la composition (Z1, Z2) prédéfinie.

8. Système (1) destiné à mettre en ordre une pluralité d'articles déplacés dans au moins un flux de masse (M1, M2), dans lequel des articles réalisés de manière identique quant à une caractéristique d'association (A, B, C) peuvent être amenés par une première unité de transmission et/ou de transfert (3) à partir dudit flux de masse (M1, M2) à un propre poste tampon (P1, P2, P3), dans lequel les postes tampons (P1, P2, P3) sont réalisés de manière à ce que, compte tenu d'une composition (Z1, Z2) prédéfinie, des articles puissent être prélevés dans un ou plusieurs des postes tampons (P1, P2, P3) et puissent être transférés et/ou convoyés par une unité de transmission et/ou de transfert (3') montée en aval des postes tampons (P1, P2, P3), dans un ordre et/ou agencement défini(s), à un poste de traitement (10), **caractérisé par le fait que** ledit un ou lesdits plusieurs poste(s) tampon(s) (P1, P2 P3) sont en communication avec une unité de commande (S) qui, compte tenu d'un signal qui est émis lorsqu'un certain nombre minimum d'articles dans un poste tampon (P1, P2, P3) n'est pas atteint, peut commander un poste de traitement (14) monté en amont des postes tampons (P1, P2, P3) et/ou un poste de fabrication (17) monté en amont des postes tampons.

9. Système (1) selon la revendication 8, dans lequel au moins deux postes de traitement (14, 14') parallèles qui sont réalisés en tant que dispositifs d'étiquetage (15, 15') sont montés en amont de ladite unité de transmission et/ou de transfert (3), et dans lequel l'un au moins des dispositifs d'étiquetage (15, 15') parallèles dispose d'au moins deux groupes d'étiquetage (16) différents qui sont choisissables de manière sélective par le dispositif d'étiquetage (15, 15') respectif en fonction d'une caractéristique d'association (A, B, C) de l'article à traiter.

10. Système (1) selon la revendication 9, dans lequel au moins un poste de traitement (14") et/ou un poste de fabrication (17) est monté en amont des dispositifs d'étiquetage (15, 15').

11. Système (1) selon l'une ou plusieurs des revendications 8 à 10, dans lequel au moins une unité de transmission et/ou de transfert (3, 3', 3") est réalisée en tant qu'étoile de distribution (6, 6', 6") ayant un ensemble de capteur(s) (5, 5', 5") destiné à détecter la caractéristique d'association (A, B, C).
